# FASCICULE DE BREVET EUROPEEN

(11) **EP 4 033 948 B1**
(45) Date de publication et mention de la délivrance du brevet: **04.10.2023**
(21) Numéro de dépôt: 20775646.1
(22) Date de dépôt: 24.09.2020
(51) Int. Cl.: A47J 37/06

(54) **APPAREIL DE CUISSON ELECTRIQUE MUNI DE DEUX ELEMENTS DE MESURE DE TEMPERATURE**
ELEKTRISCHES KOCHGERÄT MIT ZWEI TEMPERATURMESSELEMENTEN
ELECTRICAL COOKING APPLIANCE WITH TWO TEMPERATURE MEASURING ELEMENTS

(30) Priorité: 26.09.2019 FR 1910668
(43) Date de publication de la demande: 03.08.2022
(73) Titulaire: SEB S.A., 69130 Ecully (FR)
(72) Inventeur: FORNECKER, Florent, 69380 CHATILLON D'AZERGUES (FR)
(74) Mandataire: SEB Développement
(86) Numéro de dépôt international: PCT/EP2020/076789
(87) Numéro de publication internationale: WO 2021/058685

(56) Documents cités:
- EP-A1- 2 804 514
- EP-A1- 2 965 672
- EP-B1- 2 804 514
- US-A1- 2012 152 126

## Description

La présente invention concerne un appareil de cuisson électrique d'un aliment comprenant une plaque de chauffe inférieure et une plaque de chauffe supérieure au contact desquelles on peut cuire l'aliment, notamment un appareil de cuisson électrique comportant un système de commande qui permet de proposer à l'utilisateur des programmes de cuisson à partir des caractéristiques de l'aliment à cuire.

On connaît du document EP2804514 un appareil de cuisson électrique comprenant un élément chauffant électrique inférieur associé à une plaque de cuisson inférieure et un élément chauffant électrique supérieur associé à une plaque de cuisson supérieure pour chauffer au contact des plaques de cuisson inférieure et supérieure un aliment au cours d'une phase de cuisson. L'appareil de cuisson électrique comporte des premier et deuxième éléments de mesure de température qui sont agencés au contact d'une même plaque de cuisson, notamment la plaque supérieure ainsi qu'un système de commande comprenant des moyens d'estimation d'une surface d'occupation par l'aliment sur les plaques de cuisson inférieure et supérieure en utilisant les informations transmises par les premier et deuxième éléments de mesure de température.

Cependant, l'agencement des premier et deuxième éléments de mesure de température au contact d'une même plaque de cuisson peut conduire à l'estimation d'une surface d'occupation assez éloignée de la surface d'occupation réelle, notamment si l'aliment présente des formes irrégulières qui peuvent perturber le contact avec la plaque de cuisson supérieure supportant les deux éléments de mesure de température.

De plus, le système de commande sur la base de la surface d'occupation estimée va piloter de la même façon l'élément chauffant électrique inférieur associé à la plaque de cuisson inférieure et l'élément chauffant électrique supérieur associé à la plaque de cuisson supérieure. Ainsi, le système de commande génère un programme de cuisson avec un temps de cuisson qui peut conduire à un résultat qui ne sera pas complètement satisfaisant pour un utilisateur

Le but de la présente invention est de remédier aux inconvénients précités et de proposer un appareil de cuisson électrique qui présente un fonctionnement efficace avec une garantie du résultat de cuisson.

Un autre but de l'invention est de proposer un appareil de cuisson électrique qui soit de conception simple et économique à mettre en oeuvre.

Ces buts sont atteints avec un appareil de cuisson électrique comprenant un élément chauffant électrique inférieur associé à une plaque de cuisson inférieure et un élément chauffant électrique supérieur associé à une plaque de cuisson supérieure pour chauffer au contact des plaques de cuisson inférieure et supérieure un aliment au cours d'une phase de cuisson, les plaques de cuisson inférieure et supérieure s'étendant selon une direction longitudinale, ledit appareil de cuisson électrique comportant des premier et deuxième éléments de mesure de température et un système de commande comprenant des moyens d'estimation d'une surface d'occupation par l'aliment sur les plaques de cuisson inférieure et supérieure qui utilisent les informations transmises par les premiers et deuxième éléments de mesure de température, caractérisé en ce qu'un plan médian P, perpendiculaire à la direction longitudinale, divise la plaque de cuisson inférieure en des première et deuxième demi-plaques inférieures et la plaque de cuisson supérieure en des première et deuxième demi-plaques supérieures, la première demi-plaque inférieure et la première demi-plaque supérieure étant disposées d'un même côté du plan médian,et en ce que, soit le premier élément de mesure de température est agencé sur la première demi-plaque inférieure et le deuxième élément de mesure de température est agencé sur la deuxième demi-plaque supérieure ou soit le premier élément de mesure de température est agencé sur la deuxième demi-plaque inférieure et le deuxième élément de mesure de température est agencé sur la première demi-plaque supérieure, ledit appareil de cuisson électrique comportant un premier commutateur électrique inférieur apte à autoriser ou à interrompre l'alimentation électrique de l'élément chauffant électrique inférieur et un deuxième commutateur électrique supérieur apte à autoriser ou à interrompre l'alimentation électrique de l'élément chauffant électrique supérieur.

D'une manière générale, par l'élément de mesure de température agencé sur la plaque de cuisson, on comprend que l'élément de mesure de température est au contact de la plaque de cuisson ou l'élément de mesure de température est inséré dans la plaque de cuisson.

Ainsi, les premier et deuxième éléments de mesure de température sont disposés de manière symétriquement opposée. Cette disposition permet de détecter les chutes de températures sur chaque plaque de cuisson et donc de compenser un éventuel mauvais contact sur une plaque de cuisson et également de compenser un placement de l'aliment de manière très décentrée entre les plaques de cuisson. En conséquence le système de commande détermine une surface d'occupation proche de la réalité.

De plus, les éléments de mesure de température disposés chacun sur une plaque de cuisson différente permettent au système de commande de réguler chaque élément chauffant électrique de manière séparée à l'aide des commutateurs électriques et ainsi de pallier les différents phénomènes thermiques observés entre la plaque de cuisson supérieure et la plaque de cuisson inférieure, notamment le refroidissement de la plaque de cuisson inférieure lié à l'écoulement des jus de cuisson. En conséquence, l'obtention d'une cuisson et d'un marquage équilibré entre une face inférieure et une face supérieure de l'aliment sont garantis ainsi qu'un traitement adapté des aliments au comportement asymétrique du type magret de canard.

Avantageusement, les moyens d'estimation de la surface d'occupation par l'aliment utilisent des durées de baisse de température inférieure et supérieure déterminées par des mesures de températures réalisées par les premier et deuxième éléments de mesure de température après une phase de préchauffage, au début de la phase de cuisson lorsque l'aliment est mis au contact des plaques de cuisson inférieure et supérieure.

Par début de la phase de cuisson lorsque l'aliment est mis au contact des plaques de cuisson inférieure et supérieure, on comprend que le début de la phase de cuisson correspond au contact de l'aliment avec la plaque de cuisson inférieure ou au contact de l'aliment avec les plaques de cuisson inférieure et supérieure, lorsque l'appareil de cuisson électrique est fermé.

L'analyse des chutes de températures sur chaque plaque de cuisson permet de réduire la marge d'erreur dans l'estimation de la surface d'occupation.

De préférence, le système de commande détermine la surface d'occupation par l'aliment à partir de la moyenne TM des durées TI, TS de baisse de température inférieure et supérieure.

On comprend que le système de commande comporte un algorithme pour déterminer la surface d'occupation par l'aliment à partir des durées TI, TS de baisse de température inférieure et supérieure, notamment la moyenne TM des durées TI, TS de baisse de température inférieure et supérieure.

La demanderesse a mis en évidence qu'une telle moyenne permet de caractériser efficacement la surface d'occupation, notamment lorsque l'aliment à cuire est placé de manière très décentrée au sein des plaques de cuisson.

Avantageusement, les premier et deuxième éléments de mesure de température sont agencés dans des plans médians P1, P2, parallèles au plan P et divisant en deux parties égales les premières demi-plaques inférieure et supérieure et les deuxièmes demi-plaques inférieure et supérieure.

On comprend dans cette disposition que les premier et deuxième éléments de mesure de température sont en contact avec leur demi-plaque respective.

Ainsi, les éléments de mesure de température sont répartis régulièrement le long de la direction longitudinale pour permettre au système de commande de déterminer une surface d'occupation proche de la réalité quel que soit l'endroit où l'aliment est positionné entre les plaques de cuisson ou quelle que soit la quantité d'aliment.

De préférence, les plaques de cuisson inférieure et supérieure présentent chacune une surface S supérieure à 700 cm².

Une telle surface correspond à des plaques de cuisson de grande taille. La disposition des premier et deuxième éléments de mesure de température agencés de manière symétriquement opposée est particulièrement bien adaptée aux plaques de cuisson de grande taille

Avantageusement, l'appareil de cuisson électrique comprend une partie inférieure comportant la plaque de cuisson inférieure et une partie supérieure comportant la plaque de cuisson supérieure et la partie inférieure est reliée à la partie supérieure par une articulation du type charnière, l'articulation s'étendant selon la direction longitudinale.

De préférence, les premier et deuxième éléments de mesure de température sont agencés à proximité de l'articulation.

Une telle disposition permet d'implanter facilement les éléments de mesure de température dans les parties inférieures et supérieures tout en détectant correctement les durées de baisse de température.

Avantageusement, l'appareil de cuisson électrique comporte des moyens de détermination de l'épaisseur (Y) de l'aliment disposé au contact des plaques de cuisson inférieure et supérieure.

De tels moyens associés aux moyens d'estimation de la surface d'occupation Z permettent au système de commande de déterminer un programme de cuisson adapté pour obtenir un résultat de cuisson conforme aux attentes de l'utilisateur.

De préférence, les premiers et deuxième éléments de mesure de température sont des résistances à coefficient de température négatif.

Avantageusement, le premier commutateur électrique inférieur et le deuxième commutateur électrique supérieur sont des relais électriques de puissance.

De manière avantageuse, l'appareil de cuisson électrique est un gril viande.

L'invention sera mieux comprise à l'étude des modes de réalisation pris à titre nullement limitatif et illustrés dans les figures annexées dans lesquelles :
[Fig. 1] La figure 1 illustre une vue dans une position ouverte de l'appareil de cuisson électrique selon l'invention.
[Fig. 2] La figure 2 illustre une vue dans une position ouverte de l'appareil de cuisson électrique selon l'invention auquel ont été retirées les plaques de cuisson.
[Fig. 3] La figure 3 illustre un graphe représentatif des températures mesurées par des premier et deuxième éléments de mesure de température de l'appareil de cuisson électrique selon l'invention.

On notera que, dans ce document, les termes «horizontal», «vertical», «inférieur», «supérieur», «longitudinal», «transversal», «haut», «bas», employés pour décrire l'appareil de cuisson électrique, font référence à cet appareil de cuisson électrique en situation d'usage, lorsqu'il est posé sur un plan de travail horizontal.

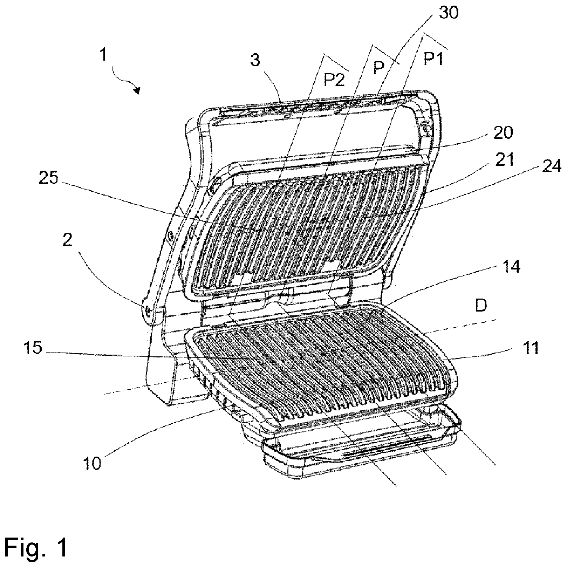

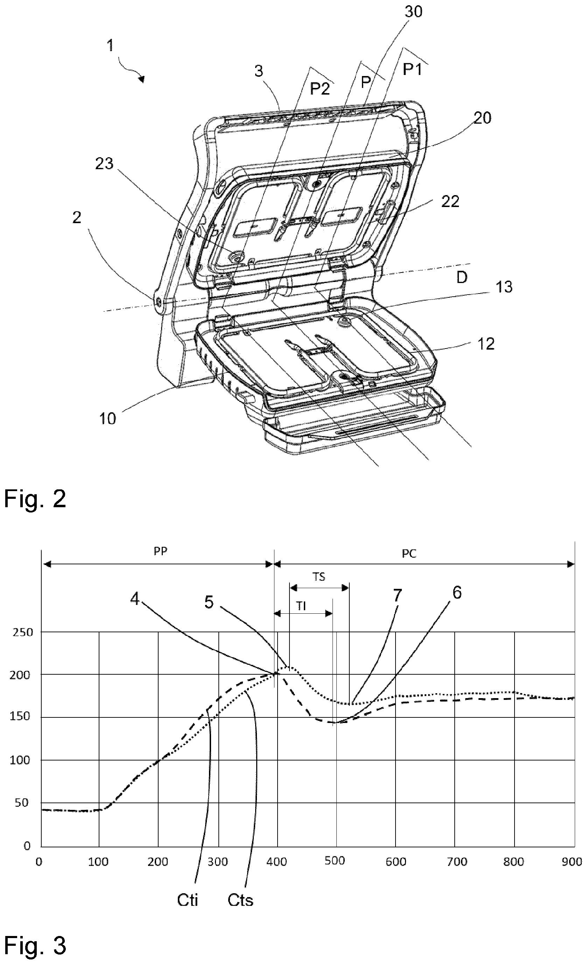

Un appareil de cuisson électrique 1 comprend de manière usuelle une alimentation électrique (non illustrée) permettant de raccorder l'appareil de cuisson électrique 1 à un réseau électrique en vue de l'alimenter en énergie. Comme illustré particulièrement aux figures 1 et 2, l'appareil de cuisson électrique 1 comprend en outre une partie inférieure 10 et une partie supérieure 20. La partie inférieure 10 est reliée à la partie supérieure 20 par une articulation 2 du type charnière.

Comme illustrée particulièrement à la figure 1, la partie inférieure 10 comporte une plaque de cuisson inférieure 11 apte à recevoir un aliment A et à venir au contact de la face inférieure de l'aliment, et la partie supérieure 20 comporte une plaque de cuisson supérieure 21 apte à être déplacée relativement à la plaque de cuisson inférieure 11, notamment par le biais de l'articulation 2, de manière à venir au contact de la face supérieure de l'aliment disposé sur la plaque de cuisson inférieure 11.

L'articulation permet de déplacer la partie supérieure 20 relativement à la partie inférieure 10 pour définir :
- une position de contact de la plaque de cuisson inférieure 11 et de la plaque de cuisson supérieure 21 dans laquelle est notamment réalisée une phase de préchauffage de l'appareil de cuisson électrique 1,
- une position ouverte permettant de disposer les aliments sur la plaque de cuisson inférieure 11 ; et
- une position fermée dans laquelle les aliments sont enserrés entre la plaque de cuisson inférieure 11 et la plaque de cuisson supérieure 21.

La position fermée définit un écartement des plaques au cours d'une phase de cuisson.

Cet écartement des plaques de cuisson inférieure 11, supérieure 21 correspond à l'épaisseur maximale des aliments disposés entre les plaques de cuisson inférieure 11, supérieure 21 dans la position fermée.

Cette épaisseur Y est variable et peut être mesurée par des moyens de détermination de l'épaisseur (non illustré) renvoyant une valeur d'épaisseur Y des aliments.

Les moyens de détermination de l'épaisseur des aliments peuvent par exemple comprendre un potentiomètre et un balancier relié à, ou compris, dans l'articulation 2 reliant la partie inférieure 10 à la partie supérieure 20 de l'appareil de cuisson électrique 1.

D'autres types de moyens de détermination de l'épaisseur des aliments peuvent également être utilisés, par exemple un capteur à effet Hall.

Par ailleurs, l'appareil de cuisson électrique 1 comporte un système de commande 3 qui peut utiliser une mesure directe de l'épaisseur Y renvoyée par ces moyens de détermination de l'épaisseur pour appliquer un programme de cuisson ou bien affecter cette mesure à différentes plages de valeurs prédéfinies stockées dans une base de données et pour lesquelles le fonctionnement de l'appareil de cuisson électrique 1 est sensiblement le même lorsque deux valeurs d'épaisseur Y mesurées se situent dans une même plage de valeurs.

Un tel système de commande 3 comprend par exemple un processeur ou un contrôleur ou bien encore un microprocesseur (non illustré sur les figures).

Comme illustrée particulièrement à la figure 2, la partie inférieure 10 comporte également un élément chauffant électrique inférieur 12 apte à chauffer la plaque de cuisson inférieure 11, et un premier élément de mesure de température 13 de la plaque de cuisson inférieure 11.

Sur cette même figure 2, et de façon analogue, la partie supérieure 20 comporte également un élément chauffant électrique supérieur 22 apte à chauffer la plaque de cuisson supérieure 21, et un deuxième élément de mesure de température 23 de la plaque de cuisson supérieure 21.

Les éléments chauffants électriques inférieur 12 et supérieur 22 sont par exemple des éléments résistifs chauffants, et les premier 13 et deuxième 23 éléments de mesure de température sont des capteurs de température, par exemple du type résistance à coefficient de température négatif qui mesurent la température des plaques de cuisson inférieure 11 et supérieure 21 à leur contact respectif.

Les plaques de cuisson inférieure 11 et supérieure 21 s'étendent selon une direction longitudinale D, parallèle à une direction d'extension de l'articulation 2 de type charnière. Un plan médian P, perpendiculaire à la direction longitudinale D, divise la plaque de cuisson inférieure 11 en des première 14 et deuxième 15 demi-plaques inférieures et la plaque de cuisson supérieure 21 en des première 24 et deuxième 25 demi-plaques supérieures. Tel que visible aux figures 1 et 2, le premier élément de mesure de température 13 est agencé sur la première demi-plaque inférieure 14 agencée à droite du plan médian P et le deuxième élément de mesure de température 23 est agencé sur la deuxième demi-plaque supérieure 25 agencée à gauche du plan médian P. On aurait pu agencer le premier élément de mesure de température 13 sur la deuxième demi-plaque inférieure 15 et le deuxième élément de mesure de température 23 sur la première demi-plaque supérieure 24. Les premier 13 et deuxième 23 éléments de mesure de température sont agencés dans des plans médians P1, P2, parallèles au plan P et divisant en deux parties égales les premières demi-plaques inférieure 14 et supérieure 24 et les deuxièmes demi-plaques inférieure 15 et supérieure 25.

Les plaques de cuisson inférieure 11 et supérieure 21 présentent chacune une surface S égale à 800 cm² pour permettre une grande capacité de cuisson.

Par ailleurs, l'appareil de cuisson électrique 1 comprend un premier commutateur électrique inférieur (non illustré sur les figures) apte à autoriser ou à interrompre l'alimentation électrique de l'élément chauffant électrique inférieur 12 et un deuxième commutateur électrique supérieur (non illustré sur les figures) apte à autoriser ou à interrompre l'alimentation électrique de l'élément chauffant électrique supérieur 22.

Ainsi, l'appareil de cuisson électrique 1 qui comprend un premier commutateur électrique inférieur et un deuxième commutateur électrique supérieur, permet de contrôler de manière indépendante le chauffage de la plaque de cuisson inférieure 11 et le chauffage de la plaque de cuisson supérieure 21. Typiquement, de tels commutateurs électriques sont par exemple des relais électriques de puissance.

Par ailleurs, les premier 13 et deuxième 23 éléments de mesure de température sont utilisés par le système de commande 3 pour réaliser la régulation en température des plaques de cuisson inférieure 11 et supérieure 21, notamment pendant une phase de préchauffage PP de l'appareil de cuisson électrique 1 et pour réguler la température des plaques de cuisson inférieure 11 et supérieure 21 au cours d'une phase de cuisson PC de l'aliment. Le système de commande 3 régule la température de la plaque de cuisson inférieure 11 et de la plaque de cuisson supérieure 21 sur des températures de consigne identiques. Les signaux émis par les premier 13 et deuxième 23 éléments de mesure de température sont utilisés par le système de commande 3 pour activer ou non les premier commutateur électrique inférieur et deuxième commutateur électrique supérieur de manière indépendante en fonction du comportement thermique des plaques de cuisson inférieure et supérieure afin de se rapprocher de la température de consigne. Ainsi on observe souvent que le premier commutateur électrique inférieur est activé plus longtemps que le deuxième commutateur électrique supérieur, malgré une consigne de température identique, car la plaque de cuisson inférieure 11 est refroidie par les jus de cuissons et donc s'éloigne de la consigne de température.

La figure 3 illustre un graphe comportant une courbe Cti représentant la température mesurée au cours du temps par le premier élément de mesure de température 13 sur la plaque de cuisson inférieure 11 et une courbe Cts représentant la température mesurée au cours du temps par le deuxième élément de mesure de température 23 sur la plaque de cuisson supérieure 21. Le système de commande comporte des moyens d'estimation d'une surface d'occupation Z qui utilisent les premier 13 et deuxième 23 éléments de mesure de température pour estimer une surface d'occupation Z de l'aliment au sein des plaques de cuisson inférieure 11 et supérieure 21.

La surface d'occupation Z de l'aliment A est estimée par le système de commande 3 à partir des durées TI, TS de baisse de température (Fig. 3) déterminées par les mesures de températures réalisées par les premier 13 et deuxième 23 éléments de mesure de température après la phase de préchauffage PP, au début de la phase de cuisson PC lorsque l'aliment est mis au contact de la plaque de cuisson inférieure 11 et au contact de la plaque de cuisson supérieure 21. Tel que visible à la figure 3, lors de la dépose de l'aliment A entre les plaques de cuisson préchauffées, les températures relevées par les premier 13 et deuxième 23 éléments de mesure de température chutent aux points 4 et 5.

Le système de commande alimente alors les éléments chauffants électriques inférieur et supérieur pour freiner et inverser la chute des températures en passant par des points de stabilisation 6 et 7 respectivement mesurés par les premier 13 et deuxième 23 éléments de mesure de température. La pente de la courbe de température aux points 4, 5, 6 et 7 est donc nulle. La durée TI de baisse de température inférieure correspond au temps écoulé entre le point 4 et le point 6. La durée TS de baisse de température supérieure correspond au temps écoulé entre le point 5 et le point 7.

Le système de commande calcule alors la moyenne TM des durées TI, TS de baisse de température inférieure et supérieure et compare cette moyenne TM à trois valeurs T1, T2 et T3 préenregistrées dans une mémoire du système de commande. Le système de commande estime la surface d'occupation Z par l'aliment A selon le processus ci-dessous :
- TM < T1 : surface d'occupation Z faible qui correspond à une occupation d'un quart de la surface des plaques de cuisson,
- T1 > TM > T2 : surface d'occupation Z intermédiaire qui correspond à une occupation de la moitié de la surface des plaques de cuisson,
- T2 > TM > T3 : surface d'occupation Z forte qui correspond à une occupation des trois quarts de la surface des plaques de cuisson,
- TM > T3 : surface d'occupation Z maximum qui correspond à une occupation de la totalité de la surface des plaques de cuisson.

La mémoire du système de commande comporte différentes valeurs de température X de cuisson interne d'un ou plusieurs aliments A déterminés correspondant chacune à un état de cuisson à coeur d'un aliment A déterminé. Chaque valeur de température X de cuisson interne d'un aliment A déterminé mise en mémoire est une constante préenregistrée en usine, avant la première utilisation opérationnelle de l'appareil de cuisson électrique 1.

Dans la mémoire, sont également stockées au moins une valeur de température de consigne de préchauffage à appliquer au cours d'une phase de préchauffage PP et au moins deux valeurs de température de consigne de cuisson à appliquer respectivement sur la plaque de cuisson inférieure et sur la plaque de cuisson supérieure au cours d'une phase de cuisson PC.

L'appareil de cuisson électrique 1 comporte une interface utilisateur 30 agencée pour permettre à l'utilisateur de sélectionner des paramètres permettant à l'appareil de cuisson électrique 1 de définir un programme de cuisson.

Un programme de cuisson se définit en entrée par une combinaison :
- de valeurs constantes prédéterminées, notamment les différentes valeurs de températures X de cuisson interne de l'aliment correspondant chacune à un état de cuisson à coeur d'un aliment A déterminé,
- de valeurs de variables mesurées ou estimées par l'appareil de cuisson électrique 1, notamment l'épaisseur Y de l'aliment A déterminé mesurée par les moyens de détermination de l'épaisseur, et/ou la surface d'occupation Z de l'aliment A déterminé
- de différents paramètres d'entrée déclarés par l'utilisateur, notamment un aliment A déterminé à cuire ou un type d'aliment A à cuire.

A partir de ces valeurs constantes, de ces valeurs variables, et de ces paramètres d'entrée, le système de commande 3 de l'appareil de cuisson électrique 1 définit un programme de cuisson, notamment en sélectionnant une valeur de température de consigne de préchauffage à appliquer au cours de la phase de préchauffage PP et au moins deux valeurs de température de consigne de cuisson à appliquer respectivement sur la plaque de cuisson inférieure et sur la plaque de cuisson supérieure au cours d'une phase de cuisson PC parmi celles stockées dans la mémoire en fonction de l'aliment A déterminé et en déterminant au moins une durée de cuisson T.

L'exécution du programme de cuisson va donc consister à appliquer une température de consigne de préchauffage au cours de la phase de préchauffage jusqu'à ce que l'utilisateur introduise un aliment déterminé A entre les plaques de cuisson inférieure 11, supérieure 21 ou bien jusqu'à ce qu'une fonction de sécurité de l'appareil de cuisson électrique 1, par exemple le dépassement d'une durée seuil, désactive les éléments chauffants électriques inférieur 12, supérieur 22 de l'appareil de cuisson électrique 1 et à appliquer au moins une température de consigne de cuisson au cours de la phase de cuisson de l'aliment déterminé A pendant des durées de cuisson T déterminées par le système de commande 3.

Bien entendu, l'invention n'est nullement limitée au mode de réalisation décrit et illustré qui n'est été donné qu'à titre d'exemple. Des modifications restent possibles, notamment du point de vue de la constitution des divers éléments ou par substitution d'équivalents techniques, sans sortir pour autant du domaine de protection de l'invention, qui est défini dans les revendications.

Ainsi, dans une variante de réalisation, Le système de commande 3 régule la température de la plaque de cuisson inférieure 11 et de la plaque de cuisson supérieure 21 sur des températures de consigne différentes de manière à mieux maitriser la cuisson et l'homogénéité du marquage d'un aliment A déterminé, notamment pour des menus spécifiques type magret de canard que l'on chauffe plus côté peau.

## Revendications

1. Appareil de cuisson électrique (1) comprenant un élément chauffant électrique inférieur (12) associé à une plaque de cuisson inférieure (11) et un élément chauffant électrique supérieur (22) associé à une plaque de cuisson supérieure (21) pour chauffer au contact des plaques de cuisson inférieure (11) et supérieure (21) un aliment (A) au cours d'une phase de cuisson (PC), les plaques de cuisson inférieure (11) et supérieure (21) s'étendant selon une direction longitudinale (D), ledit appareil de cuisson électrique (1) comportant des premier (13) et deuxième (23) éléments de mesure de température et un système de commande (3) comprenant des moyens d'estimation d'une surface d'occupation (Z) par l'aliment (A) sur les plaques de cuisson inférieure (11) et supérieure (21) qui utilisent les informations transmises par les premiers (13) et deuxième (23) éléments de mesure de température, un plan médian (P), perpendiculaire à la direction longitudinale (D), divisant la plaque de cuisson
inférieure (11) en des première (14) et deuxième (15) demi-plaques inférieures et la plaque de cuisson supérieure (21) en des première (24) et deuxième (25) demi-plaques supérieures, la première (14) demi-plaque inférieure et la première (24) demi-plaque supérieure étant disposées d'un même côté du plan médian, **caractérisé en ce que** :
- soit le premier élément de mesure de température (13) est agencé sur la première demi-plaque inférieure (14) et le deuxième élément de mesure de température (23) est agencé sur la deuxième demi-plaque supérieure (25) ou,
- soit le premier élément de mesure de température (13) est agencé sur la deuxième demi-plaque inférieure (15) et le deuxième élément de mesure de température (23) est agencé sur la première demi-plaque supérieure (24),
- ledit appareil de cuisson électrique (1) comportant un premier commutateur électrique inférieur apte à autoriser ou à interrompre l'alimentation électrique de l'élément chauffant électrique inférieur (12) et un deuxième commutateur électrique supérieur apte à autoriser ou à interrompre l'alimentation électrique de l'élément chauffant électrique supérieur (22).

2. Appareil de cuisson électrique (1) selon la revendication 1, **caractérisé en ce que** les moyens d'estimation de la surface d'occupation (Z) par l'aliment (A) utilisent des durées (TI, TS) de baisse de température inférieure et supérieure déterminées par des mesures de températures réalisées par les premier (13) et deuxième (23) éléments de mesure de température après une phase de préchauffage (PP), au début de la phase de cuisson (PC) lorsque l'aliment est mis au contact des plaques de cuisson inférieure (11) et supérieure (21) .

3. Appareil de cuisson électrique (1) selon la revendication 2, **caractérisé en ce que** le système de commande (3) détermine la surface d'occupation (Z) par l'aliment (A) à partir de la moyenne TM des durées (TI, TS) de baisse de température inférieure et supérieure.

4. Appareil de cuisson électrique (1) selon l'une quelconque des revendications 1 à 3, **caractérisé en ce que** les premier (13) et deuxième (23) éléments de mesure de température sont agencés dans des plans médians (P1, P2), parallèles au plan (P) et divisant en deux parties égales les premières demi-plaques inférieure (14) et supérieure (24) et les deuxièmes demi-plaques inférieure (15) et supérieure (25).

5. Appareil de cuisson électrique (1) selon l'une quelconque des revendications 1 à 4, **caractérisé en ce que** les plaques de cuisson inférieure (11) et supérieure (21) présentent chacune une surface (S) supérieure à 700 cm².

6. Appareil de cuisson électrique (1) selon l'une quelconque des revendications 1 à 5, **caractérisé en ce qu'**il comprend une partie inférieure (10) comportant la plaque de cuisson inférieure (11) et une partie supérieure (20) comportant la plaque de cuisson supérieure (21) et **en ce que** la partie inférieure (10) est reliée à la partie supérieure (20) par une articulation (2) du type charnière, l'articulation (2) s'étendant selon la direction longitudinale (D).

7. Appareil de cuisson électrique (1) selon la revendication 6, **caractérisé en ce que** les premier (13) et deuxième (23) éléments de mesure de température sont agencés à proximité de l'articulation (2).

8. Appareil de cuisson électrique (1) selon l'une quelconque des revendications 1 à 7, **caractérisé en ce qu'**il comporte des moyens de détermination de l'épaisseur (Y) de l'aliment disposé au contact des plaques de cuisson inférieure (11) et supérieure (21).

9. Appareil de cuisson électrique (1) selon l'une quelconque des revendications 1 à 8, **caractérisé en ce que** les premiers (13) et deuxième (23) éléments de mesure de température sont des résistances à coefficient de température négatif.

10. Appareil de cuisson électrique (1) selon l'une quelconque des revendications 1 à 9, **caractérisé en ce que** le premier commutateur électrique inférieur et le deuxième commutateur électrique supérieur sont des relais électriques de puissance.

## Patentansprüche

1. Elektrische Kocheinrichtung (1), umfassend ein unteres elektrisches Heizelement (12), das mit einer unteren Kochplatte (11) verknüpft ist, und ein oberes elektrisches Heizelement (22), das mit einer oberen Kochplatte (21) verknüpft ist, um im Kontakt der unteren (11) und der oberen (21) Kochplatte im Laufe einer Kochphase (PC) ein Lebensmittel (A) zu erhitzen, wobei sich die untere (11) und die obere (21) Kochplatte in einer Längsrichtung (D) erstrecken, wobei die elektrische Kocheinrichtung (1) ein erstes (13) und ein zweites (23) Temperaturmesselement und ein Steuersystem (3) umfasst, das Mittel zur Schätzung einer Belegungsfläche (Z) durch das Lebensmittel (A) auf der unteren (11) und der oberen (21) Kochplatte umfasst, die die von dem ersten (13) und dem zweiten (23) Temperaturmessmittel übertragenen Informationen verwenden, eine mittlere Ebene (P),
senkrecht zur Längsrichtung (D), die die untere Kochplatte (11) in eine erste (14) und eine zweite (15) untere Halbplatte und die obere Kochplatte (21) in eine erste (24) und eine zweite (25) obere Halbplatte teilt, wobei die erste untere Halbplatte (14) und die erste obere Halbplatte (24) auf einer gleichen Seite der mittleren Ebene angeordnet sind, **dadurch gekennzeichnet, dass**:
- entweder das erste Temperaturmesselement (13) auf der ersten unteren Halbplatte (14) eingerichtet ist und das zweite Temperaturmesselement (23) auf der zweiten oberen Halbplatte (25) eingerichtet ist,
- oder das erste Temperaturmesselement (13) auf der zweiten unteren Halbplatte (15) eingerichtet ist und das zweite Temperaturmesselement (23) auf der ersten oberen Halbplatte (24) eingerichtet ist,
- wobei die elektrische Kocheinrichtung (1) einen ersten unteren elektrischen Schalter umfasst, der geeignet ist, die Stromzufuhr des unteren elektrischen Heizelements (12) zu erlauben oder zu unterbrechen, und einen zweiten oberen elektrischen Schalter, der geeignet ist, die Stromzufuhr des oberen elektrischen Heizelements (22) zu erlauben oder zu unterbrechen.

2. Elektrische Kocheinrichtung (1) nach Anspruch 1, **dadurch gekennzeichnet, dass** die Mittel zur Schätzung der Belegungsfläche (Z) durch das Lebensmittel (A) Zeitdauern (TI, TS) einer unteren und oberen Temperaturabsenkung verwenden, die durch Temperaturmessungen bestimmt werden, die von dem ersten (13) und dem zweiten (23) Temperaturmesselement nach einer Vorwärmphase (PP), zu Beginn der Kochphase (PC), wenn das Lebensmittel mit der unteren (11) und der oberen (21) Kochplatte in Kontakt gebracht wird, vorgenommen werden.

3. Elektrische Kocheinrichtung (1) nach Anspruch 2, **dadurch gekennzeichnet, dass** das Steuersystem (3) die Belegungsfläche (Z) durch das Lebensmittel (A) ausgehend von dem Durchschnitt TM der Zeitdauern (TI, TS) einer unteren und oberen Temperaturabsenkung bestimmt.

4. Elektrische Kocheinrichtung (1) nach einem der Ansprüche 1 bis 3, **dadurch gekennzeichnet, dass** das erste (13) und das zweite (23) Temperaturmesselement in mittleren Ebenen (P1, P2) eingerichtet sind, die parallel zur Ebene (P) verlaufen und die erste untere (14) und erste obere (24) Halbplatte und die zweite untere (15) und die zweite obere (25) Halbplatte in zwei gleiche Teile teilen.

5. Elektrische Kocheinrichtung (1) nach einem der Ansprüche 1 bis 4, **dadurch gekennzeichnet, dass** die untere (11) und die obere (21) Kochplatte jeweils eine Oberfläche (S) von mehr als 700 cm² aufweisen.

6. Elektrische Kocheinrichtung (1) nach einem der Ansprüche 1 bis 5, **dadurch gekennzeichnet, dass** sie einen unteren Teil (10) umfasst, der die untere Kochplatte (11) umfasst, und einen oberen Teil (20), der die obere Kochplatte (21) umfasst, und dadurch, dass der untere Teil (10) über ein Gelenk (2) vom Scharniertyp mit dem oberen Teil (20) verbunden ist, wobei sich das Gelenk (2) in der Längsrichtung (D) erstreckt.

7. Elektrische Kocheinrichtung (1) nach Anspruch 6, **dadurch gekennzeichnet, dass** das erste (13) und das zweite (23) Temperaturmesselement in der Nähe des Gelenks (2) eingerichtet sind.

8. Elektrische Kocheinrichtung (1) nach einem der Ansprüche 1 bis 7, **dadurch gekennzeichnet, dass** sie Mittel zur Bestimmung der Dicke (Y) des im Kontakt mit der unteren (11) und der oberen Kochplatte (21) angeordneten Lebensmittels umfasst.

9. Elektrische Kocheinrichtung (1) nach einem der Ansprüche 1 bis 8, **dadurch gekennzeichnet, dass** das erste (13) und das zweite (23) Temperaturmesselement Widerstände mit negativem Temperaturkoeffizienten sind.

10. Elektrische Kocheinrichtung (1) nach einem der Ansprüche 1 bis 9, **dadurch gekennzeichnet, dass** der erste untere elektrische Schalter und der zweite obere elektrische Schalter elektrische Leistungsrelais sind.

## Claims

1. Electrical cooking apparatus (1) comprising a lower electrical heating element (12) associated with a lower cooking plate (11) and an upper electrical heating element (22) associated with an upper cooking plate (21) for heating a foodstuff (A) in contact with the lower (11) and upper (21) cooking plates during a cooking phase (PC), the lower (11) and upper (21) cooking plates extending in a longitudinal direction (D), said electrical cooking apparatus (1) comprising first (13) and second (23) temperature measuring elements and a control system (3) comprising means for estimating a surface area (Z) occupied by the foodstuff (A) on the lower (11) and upper (21) cooking plates, which means use the information transmitted by the first (13) and second (23) temperature measuring elements, a median plane (P),
perpendicular to the longitudinal direction (D), dividing the lower cooking plate (11) into first (14) and second (15) lower half-plates and the upper cooking plate (21) into first (24) and second (25) upper half-plates, the first lower half-plate (14) and the first upper half-plate (24) being arranged on the same side of the median plane, **characterised in that**:
- either the first temperature measuring element (13) is arranged on the first lower half-plate (14) and the second temperature measuring element (23) is arranged on the second upper half-plate (25), or
- the first temperature measuring element (13) is arranged on the second lower half-plate (15) and the second temperature measuring element (23) is arranged on the first upper half-plate (24),
- said electrical cooking apparatus (1) comprising a first lower electrical switch capable of authorising or interrupting the power supply to the lower electrical heating element (12) and a second upper electrical switch capable of authorising or interrupting the power supply to the upper electrical heating element (22).

2. Electrical cooking apparatus (1) according to claim 1, **characterised in that** the means for estimating the surface area (Z) occupied by the foodstuff (A) use lower and upper temperature drop times (Tl, TS) determined by temperature measurements carried out by the first (13) and second (23) temperature measuring elements after a preheating phase (PP), at the start of the cooking phase (PC) when the foodstuff is brought into contact with the lower (11) and upper (21) cooking plates.

3. Electrical cooking apparatus (1) according to claim 2, **characterised in that** the control system (3) determines the surface area (Z) occupied by the foodstuff (A) on the basis of the average TM of the times (Tl, TS) during which the lower and upper temperatures are lowered.

4. Electrical cooking apparatus (1) according to any one of claims 1 to 3, **characterised in that** the first (13) and second (23) temperature measuring elements are arranged in median planes (P1, P2) parallel to the plane (P) and dividing the first lower (14) and upper (24) half-plates and the second lower (15) and upper (25) half-plates into two equal parts.

5. Electrical cooking apparatus (1) according to any one of claims 1 to 4, **characterised in that** the lower (11) and upper (21) cooking plates each have a surface area (S) greater than 700 cm².

6. Electrical cooking apparatus (1) according to any one of claims 1 to 5, **characterised in that** it comprises a lower part (10) comprising the lower cooking plate (11) and an upper part (20) comprising the upper cooking plate (21) and **in that** the lower part (10) is connected to the upper part (20) by a joint (2) of the hinge type, the joint (2) extending in the longitudinal direction (D).

7. Electrical cooking apparatus (1) according to claim 6, **characterised in that** the first (13) and second (23) temperature measuring elements are arranged close to the joint (2).

8. Electrical cooking apparatus (1) according to any one of claims 1 to 7, **characterised in that** it comprises means for determining the thickness (Y) of the foodstuff arranged in contact with the lower (11) and upper (21) cooking plates.

9. Electrical cooking apparatus (1) according to any one of claims 1 to 8, **characterised in that** the first (13) and second (23) temperature measuring elements are resistors with a negative temperature coefficient.

10. Electrical cooking apparatus (1) according to any one of claims 1 to 9, **characterised in that** the first lower electrical switch and the second upper electrical switch are electrical power relays.
